# EUROPÄISCHE PATENTSCHRIFT

(11) **EP 0 957 377 B1**
(45) Veröffentlichungstag und Bekanntmachung des Hinweises auf die Patenterteilung: **07.06.2006**
(21) Anmeldenummer: 99105471.9
(22) Anmeldetag: 17.03.1999
(51) Int. Cl.: G01V 3/15

(54) **Vorrichtung und Verfahren zum Orten von Metallteilen**
Device and method for locating metal objects
Dispositif et procédé pour localiser des objets metalliques

(30) Priorität: 15.05.1998 DE 29808830 U
(43) Veröffentlichungstag der Anmeldung: 17.11.1999
(73) Patentinhaber: FIRMA ING. KLAUS EBINGER, D-51149 Köln (DE)
(72) Erfinder: Ebinger, Klaus, D-51143 Köln (DE)
(74) Vertreter: Heim, Hans-Karl

(56) Entgegenhaltungen:
- GB-A- 616 701
- US-A- 2 201 256
- US-A- 3 471 772
- US-A- 3 823 365
- US-A- 4 348 639
- US-A- 5 721 489

## Beschreibung

Die Erfindung betrifft eine Vorrichtung zum Orten von Metallteilen mit einer Sondenanordnung sowie einer Haltevorrichtung, die die Sondenanordnung trägt nach dem Oberbegriff des Anspruchs 1. Die Erfindung betrifft ferner ein Verfahren zum Orten von Metallteilen mit der erfindungsgemäßen Vorrichtung.

Eine Vorrichtung dieser Gattung ist aus der G 91 14 716.6 bekannt. Dort ist ein Suchgerät offenbart, bei dem eine Sonde an einer Anordnung von Rohrelementen angeschlossen ist. Die flächig ausgebildete Sonde ist über eine Gelenkverbindung mit einem Rohrende verbunden, so daß die Achse der in der Sonde befindlichen Spule verschiedene Winkel mit Bezug auf die Rohrachse einnehmen kann. Die Geräteelektronik sowie eine netzunabhängige Spannungsquelle sind innerhalb der Rohrelemente angeordnet.

Grundsätzlich können gattungsgemäße Suchgeräte als aktive oder als passive Vorrichtungen ausgelegt sein.

Passive Detektorvorrichtungen arbeiten nach dem Prinzip, daß durch das in der Umwelt vorhandene elektromagnetische Strahlungsgemisch die in der Erde oder an sonstigen verborgenen Stellen befindlichen Metallteile, beispielsweise metallene Versorgungsleitungen, durch Induktion ein elektromagnetisches Sekundärfeld erzeugen; im stromdurchflossenen Zustand erzeugen die Leitungen ferner von sich aus ein elektromagnetisches Feld. Diese aus der Präsenz der Leitungen resultierenden Felder werden von den passiven Suchanordnungen nachgewiesen und geben Aufschluß über die räumlichen Lage der verborgenen Metallteile.

Aktive Gerätesysteme erzeugen ihrerseits ein elektromagnetisches Wechselfeld, welches auf die metallischen Suchobjekte einwirkt und dort zur Erzeugung von Wirbelströmen führt. Diese Wirbelströme wirken aufgrund des erzeugten Sekundärfeldes auf die Suchspule zurück.

Vorzugsweise sind Suchanordnungen, die nach dem aktiven Verfahren arbeiten, mit einer Sendespule sowie einer oder mehreren Empfängerspulen ausgestattet. Diese können in demselben Spulengehäuse oder auch in verschiedenen Gehäusen untergebracht sein. Durch die Unterbringung der Spulen in verschiedenen Gehäusen ist es möglich, sowohl deren Abstand der speziellen Suchaufgabe anzupassen, als auch den Winkel, den die Spulenachsen miteinander bilden, zu variieren. Der Winkel zwischen den Spulenachsen hat insbesondere im Hinblick auf die Minimierung der direkten Einwirkung des Senderspulenfeldes auf die Empfängerspule Bedeutung; im Sinne möglichst guter Nachweiseigenschaften sollte die direkte Einwirkung des Senderstrahlungsfeldes auf die Empfängerspule möglichst klein sein, so daß auf die Empfängerspule im wesentlichen das von den Wirbelströmen in den Suchobjekten erzeugte Feld einwirkt. Eine solche Entkopplung von Sender- und Empfängerspule wird dadurch erreicht, daß die Spulenachsen miteinander einen Winkel von 90^{o} bilden; hierdurch herrscht in der Empfängerspule ein im wesentlichen tangentialer Feldfluß bezüglich des Senderspulenfeldes, wodurch ein Induktionsminimum entsteht. Von der Empfängerspule wird somit hauptsächlich das eigentliche Ortungssignal empfangen, dessen Frequenz vorzugsweise im VLF-Gebiet ("very low frequency") liegt, daraufhin verstärkt und auf beliebigem Wege zur Anzeige gebracht.

Das sogenannte 90^{o} -Verfahren ist bekannt und wird im wesentlichen durch die Verwendung einer Anordnung mit aktivem Spulenelement und dessen Kombination mit einer passiven Suchspule realisiert, wobei die relativen Winkel der Spulenachsen entsprechend eingestellt werden.

Beispielsweise ist in US-4,348,639 ein Metallsuchgerät mit den Merkmalen des Oberbegriffs des Anspruchs 1 beschrieben, bei dem die Empfängerspule schwenkbar an dem Querträger befestigt ist.

In US-2,201,256 ist ein Metallsuchgerät beschrieben, bei dem zwischen zwei Querträgern an einem Ende ein Gehäuse mit einer Sendeelektronik und gegenüberliegend am anderen Ende ein Gehäuse mit einer Detektorelektronik angeordnet ist. Mittig an den Querträgern sind Haltegriffe für eine Bedienperson befestigt. Die relative Winkelstellung von Sende- und Detektorgehäuse kann in bestimmten Winkelpositionen verändert werden.

Das an sich bewährte Verfahren und die Vorrichtung sind verbesserungsbedürftig, da eine aufwendige Kombination von Suchgeräten erforderlich ist, was insbesondere zu einer schwierigen Handhabung der zum Einsatz kommenden Gerätschaft führt.

Der vorliegenden Erfindung liegt somit die A u f g a b e zugrunde, die oben genannten Nachteile zu beseitigen, wodurch insbesondere erreicht werden soll, daß die Handhabbarkeit der Suchanordnungen verbessert wird; ferner sollen existierende Standard-Komponenten verwendet werden können.

Diese Aufgabe wird durch eine Vorrichtung mit den Merkmalen des Patentanspruchs 1 gelöst. Ein Verfahren zum Orten von Metallteilen mit einer erfindungsgemäßen Vorrichtung wird in Patentanspruch 19 angegeben.

Eine Vorrichtung der oben angegebenen Art ist erfindungsgemäß dadurch weitergebildet, dass die Spulen an den Enden des Querträgers schwenkbar zur Längsrichtung des Querträgers angeordnet sind, dass zur Entkopplung der Spulen die relative Orientierung der Spulenachsen zueinander variierbar ist, wobei die Spulenachsen in der Entkopplungsstellung einen Winkel von etwa 90 bilden, dass die Spulen mittels relativer Orientierung der Spulenachsen in mindestens zwei Verkopplungsstellungen einstellbar sind, und dass die Spulen in Verkopplungsstellung parallel zueinaner mit jeweils horizontaler oder vertikaler Position angeordnet sind.

Bevorzugt weist der Querträger ein Querrohr sowie eine erste und eine zweite, das Querrohr wenigstens teilweise umgebende Gelenkverbindung auf, an deren Enden die Spulen schwenkbar angebracht sind.

Es ist vorteilhaft, wenn der Querträger eine veränderbare Länge hat.

Dabei ist bevorzugt, daß die Länge des Querträgers durch das Verschieben der ersten und/oder der zweiten Gelenkverbindung verändert wird.

Besonders vorteilhaft ist es, wenn der Querträger schwenkbar mit dem Längsträger verbunden ist.

Der Längsträger weist vorzugsweise ein Tragrohr sowie eine das Tragrohr wenigstens teilweise umgebende dritte Gelenkverbindung auf, an deren Ende der Querträger schwenkbar angebracht ist.

Es ist ferner vorteilhaft, wenn der Längsträger in seiner Länge veränderbar ist.

Diese Längenveränderung wird vorzugsweise durch Verschieben der dritten Gelenkverbindung bezüglich des Tragrohres bewerkstelligt.

Es ist nützlich, wenn die Gelenkverbindungen Klemmen aufweisen, mit welchen sie an dem Querrohr bzw. dem Tragrohr fixiert werden.

Bevorzugt ist der Längsträger wenigstens teilweise als Batteriebehälter ausgebildet.

In einer vorteilhaften Ausführung der Erfindung ist der als Batteriebehälter ausgebildete Teil des Längsträgers ein Teil des Tragrohres und vom restlichen Teil des Tragrohres abnehmbar.

Ferner sind eine Geräteelektronik sowie ein Bedienfeld am Längsträger befestigt.

Ebenfalls kann es vorteilhaft sein, wenn elektronische Bauteile innerhalb des Längsträgers angeordnet sind.

Die erfindungsgemäße Vorrichtung kann so eingestellt werden, daß die Achse der Senderspule im wesentlichen senkrecht zur Achse der Empfängerspule steht.

Für gewisse Suchaufgaben kann es auch nützlich sein, daß die Achse der Senderspule im wesentlichen parallel zur Achse der Empfängerspule angeordnet ist.

Weiterhin ist es bevorzugt, daß Sender- und Empfängerelektronik sowie die zugehörigen Induktivitäten sich in Spulengehäusen befinden und vollständig vergossen sind.

In einer vorteilhaften Ausführung sind die Spulengehäuse quadratisch.

Auch kann ein externes Elektronikgehäuse mit Bedien- und/oder Kontrollelementen vorgesehen sein.

Es kann vorteilhaft sein, wenn die Suchanordnung mit einstellbarer Bodenkompensation, Metallunterscheidung bzw. Metalldiskriminierung ausgerüstet ist.

Bei dem erfindungsgemäßen Verfahren zum Orten von Metallteilen mit der erfindungsgemäßen Vorrichtung erfolgt die Analyse der Ausgangssignale der Empfängerspule bezüglich ihrer Amplitude und/oder ihrer Phase.

Hierbei kann es sich als Vorteil erweisen, wenn die analogen Amplituden- und/oder Phasenwerte digitalisiert und in dieser Form ausgewertet werden.

Der Erfindung liegt die überraschende Erkenntnis zugrunde, daß durch die besondere Anordnung von Sender- und Empfängerspule bezüglich der Haltevorrichtung und ferner durch den Aufbau der Haltevorrichtung aus Längs- und Querträger eine besonders gute Handhabbarkeit vorliegt. Dies resultiert besonders aus der im Vergleich zu den 90^{o} -Transmitter/Reiceiver-Systemen kompakten Ausführung der erfindungsgemäßen Vorrichtung. Im Ergebnis können somit eine Vielzahl zusätzlicher Suchprobleme mit der Vorrichtung lösbar sein, welche eine gute Handhabbarkeit voraussetzen. Weiterhin ist die Erfindung im Hinblick auf die physikalischen Gegebenheiten verschiedener Suchprobleme in mehrerlei Hinsicht variabel. Zum einen kann das 90^{o} -Verfahren angewendet werden, wodurch die Entkopplung von Sender- und Empfängerspule erfolgt; dies führt besonders bei kleinen, in vergleichsweise geringer Tiefe liegenden Suchobjekten zu einem günstigen Nachweisverhalten. Für andere Suchaufgaben ist hingegen eine Entkopplung der Spulen durch die 90 -Stellung nicht erforderlich; besonders dann nicht, wenn große, tiefliegende Suchobjekte nachgewiesen werden sollen. In diesem Fall können beide Suchspulen entweder eine horizontale oder eine vertikale Position einnehmen. Damit entsteht zwischen der Sender- und Empfängerspule eine wechselseitige Induktion, die durch das Vorhandensein von Metall verändert wird. Eine weitere Variationsmöglichkeit besteht darin, daß neben der elektromagnetischen Verkopplung auch der Basisabstand der Suchspulen je nach Suchaufgabe variiert werden kann. Auch der zu wählende Basisabstand hängt wesentlich von der Lage und der Größe der Suchobjekte ab. Je geringer der Abstand zwischen den Spulen gewählt wird, desto größer ist deren Verkopplung im Nachfeld des Senders. Damit nimmt die Feldstärke im Bereich der Spulen zu, wobei jedoch die Nachweiswahrscheinlichkeit in großer Tiefe abnimmt. Will man daher relativ kleine, weniger tiefliegende Metallteile orten, so wählt man vorzugsweise eine kleine Spulenbasis. Für große Objekte in großer Tiefe ist hingegen ein großer Spulenabstand vorteilhaft; letzteres resultiert daraus, daß nur die äußeren und somit tiefreichenden Feldkomponenten des Senders zur Wirkung kommen, wodurch besonders in geringer Tiefe liegende Kleinteile dem Nachweis unzugänglich sind, die Signalwirkung auf große, tiefliegende Teile jedoch angehoben wird.

Ein weiterer Vorteil der Erfindung besteht darin, daß die Vorrichtung mit Standardkomponenten bereits existenter Suchgeräteprogramme realisiert werden kann. Die Sender- und Empfängerspulen können nahezu beliebige Form aufweisen. Besonders günstig ist die Verwendung quadratisch ausgebildeter Spulengehäuse, da dies ein sicheres Abstellen der gesamten Vorrichtung auf dem Boden gestattet. Dadurch, daß sich die Sender- und die Empfängerelektronik sowie die Induktivitäten vollständig in den jeweiligen Spulengehäusen befinden und dort vergossen sind, ergibt sich ein sehr robuster und kompakter Geräteaufbau.

Je nach Suchaufgabe kann die Geräteelektronik so gewählt sein, daß die Ausgangssignale bezüglich ihrer Amplitude und/oder ihrer Phase ausgewertet werden können. Damit die Meßdaten den Verfahren der elektronischen Datenverarbeitung zugänglich werden, kann die Meßelektronik auch so ausgelegt sein, daß die analogen Amplituden und/oder Phasenwerte digitalisiert und in dieser Form ausgewertet werden.

Die Erfindung ist im folgenden anhand von Zeichnungen von Ausführungsbeispielen mit weiteren Einzelheiten näher erläutert.
- Fig. 1: ist eine Seitenansicht einer erfindungsgemäßen Vorrichtung mit einer speziellen Ausrichtung der Spulenanordnung.
- Fig. 2: zeigt einen Ausschnitt der Vorrichtung nach Fig. 1 mit einer variierten Einstellung der Haltevorrichtung.
- Fig. 3: entspricht Fig. 2 mit einem variierten Basis-abstand.
- Fig. 4: entspricht Fig. 3 mit einer variierten Ausrichtung der Spulen.
- Fig. 5: zeigt eine Draufsicht auf einen Teil der erfindungsgemäßen Vorrichtung mit einer Ausrichtung der Spulen entsprechend Fig. 3.
- Fig. 6: zeigt eine Vorrichtung entsprechend der Darstellung nach Fig. 2, jedoch mit paralleler Anordnung der beiden Spulen.

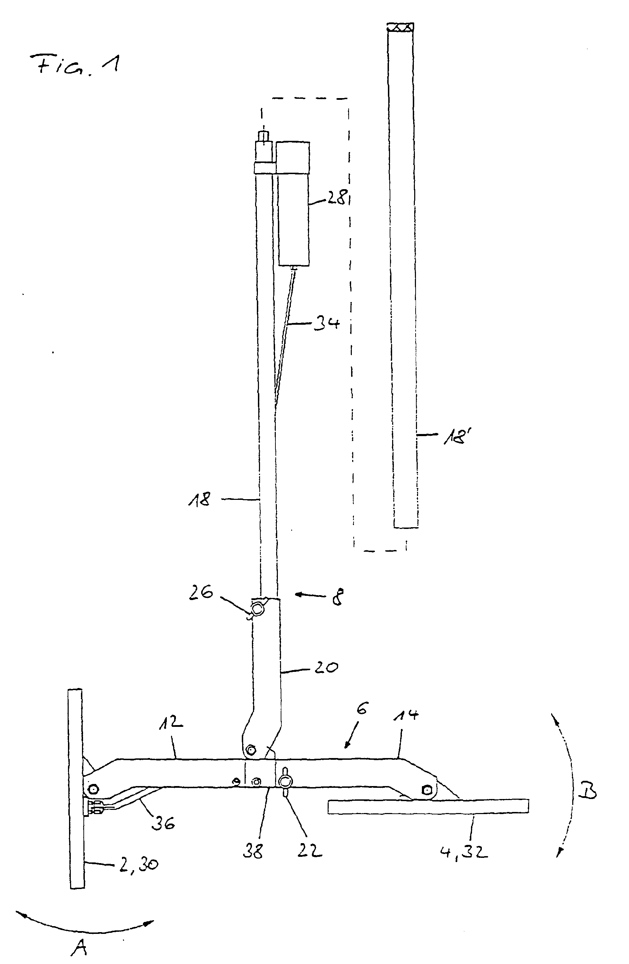

In Fig. 1 ist eine Vorrichtung zum Orten von Metallteilen gemäß der vorliegenden Erfindung dargestellt. Die Vorrichtung weist einen Querträger 6 und einen Längsträger 8 auf. Der Längsträger umfaßt Gelenkverbindungen 12, 14, an deren Enden Spulen 2, 4 beinhaltende Gehäuse schwenkbar (A, B) angebracht sind. Die schwenkbare Verbindung erfolgt dadurch, daß von den Spulenflächen ausgehende Fortsätze der Spulen 2, 4 von einer als Achse wirkenden Schraube im Endbereich der Gelenkverbindung 12, 14 getragen werden. Über eine gleichartige Gelenkverbindung 20 ist das Tragrohr 18 des Längsträgers 8 mit einem Verbindungsglied 38 des Querträgers 6 verbunden. Die Gelenkverbindungen 12, 14, 20 weisen jeweils Klemmen 22, 24, 26 auf, mit denen sie sich an dem Tragrohr 18 bzw. an dem in Fig. 1 nicht sichtbaren Querrohr 10 festlegen lassen. Bei der vorliegenden Ausführung ist die Spule 4 horizontal ausgerichtet, während die Spule 2 vertikal angeordnet ist; bei letzterer erkennt man die elektrische Zuleitung 36. Am Tragrohr 18 ist eine Geräteelektronik 28 mit einer elektrischen Zuleitung 34 befestigt. Das Tragrohr 18 ist teilbar, wobei vorzugsweise der abzutrennende Teil 18' als Batteriebehälter ausgebildet ist. Bei der in Fig. 1 dargestellten Ausführung stehen die Spulenachsen der Spulen 2, 4 senkrecht zueinander, so daß ein Nachweis nach dem 90^{o} -Verfahren erfolgen kann. Der in der Länge veränderliche Querträger 6 ist auf minimale Länge eingestellt, da die Gelenkverbindungen 12, 14 auf dem dadurch nicht erkennbaren Querrohr 10 bis zu einem Anschlag zusammengeschoben sind.

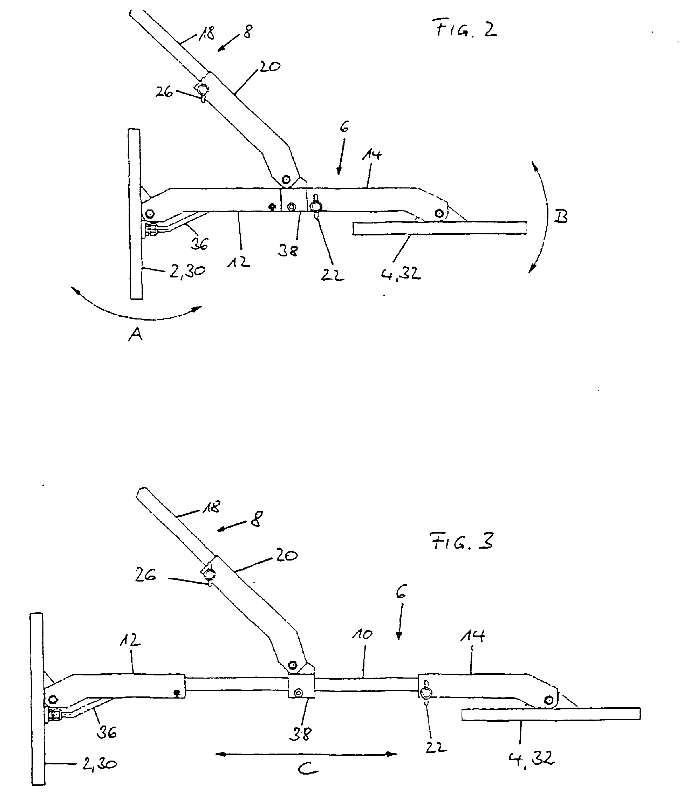

Fig. 2 zeigt die Vorrichtung nach Fig. 1 mit identisch angeordneten Spulen 2, 4. Allerdings ist hier veranschaulicht, daß der Längsträger 8 bezüglich des Querträgers 6 schwenkbar über die Gelenkvorrichtung 20 und das Verbindungsglied 38 angeordnet ist. Der Längsträger 8 ist hier in einer bezüglich des Querträgers 6 abgewinkelten Stellung dargestellt.

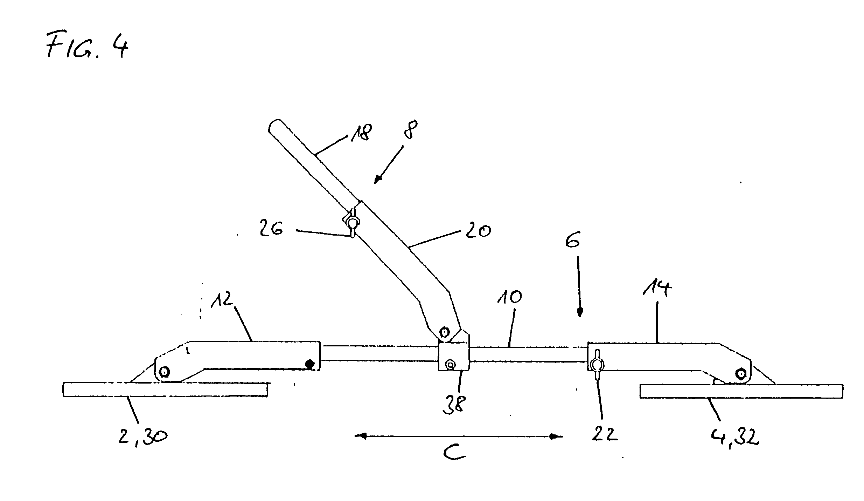

Fig. 3 zeiget einen Zustand der erfindungsgemäßen Vorrichtung, welcher mit dem in Fig. 2 gezeigten Zustand bis auf die Basisbreite übereinstimmt. Durch C ist angedeutet, daß sich die Gelenkverbindungen 12, 14 auf dem Querrohr 10 des Querträgers 6 verschieben lassen, wodurch der Abstand zwischen den Spulen 2, 4 verändert wird.

In Fig. 4 ist dieser auseinandergezogene Zustand nochmals dargestellt, wobei hier zusätzlich die Spulenachsen der Spulen 2, 4 parallel stehen und horizontal ausgerichtet sind. Diese parallele Ausrichtung der Spulenachsen der Spulen 2, 4 kann auch im zusammengeschobenen Zustand des Querträgers 6 erreicht werden; ferner können auch beide Spulen 2, 4 vertikal ausgerichtet werden, wodurch ebenfalls Parallelität der Spulenachsen vorliegt, und dies sowohl im zusammengeschobenen als auch im auseinandergezogenen Zustand des Querträgers 6.

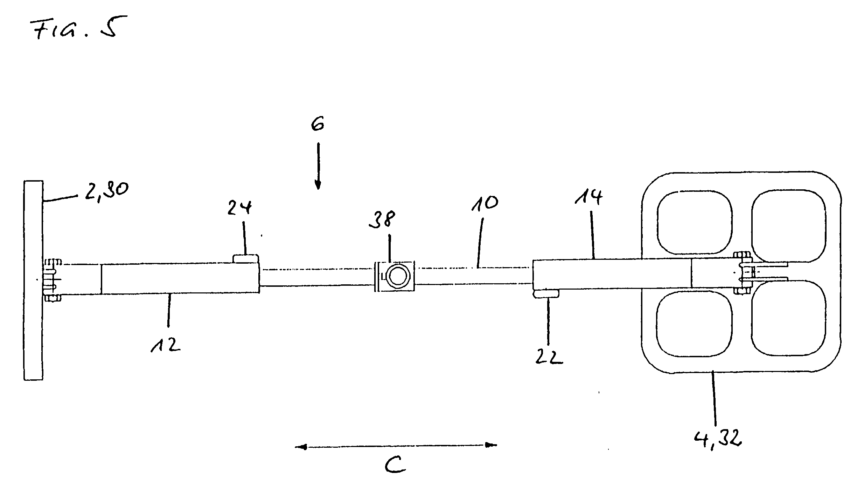

Fig. 5 zeigt eine Draufsicht auf den Querträger 6 mit einer Spulenanordnung, die derjenigen in Fig. 3 entspricht. Die Spule 2 ist vertikal angeordnet, während die Spule 4 horizontal ausgerichtet ist. Man erkennt die Klemmen 22, 24 beider Gelenkverbindungen 12, 14 sowie die quadratische Ausgestaltung der Spulengehäuse 30, 32 der jeweiligen Spulen 2, 4. Die Spulengehäuse 30, 32 sind über Fortsätze auf von den Gelenkverbindungen 12, 14 bereitgestellten Achsen gelagert. In der Mitte des Querträgers 6 erkennt man das Verbindungsglied 38, welches zur schwenkbaren Montage des Längsträgers 8 über dessen Gelenkverbindung 20 vorgesehen ist.

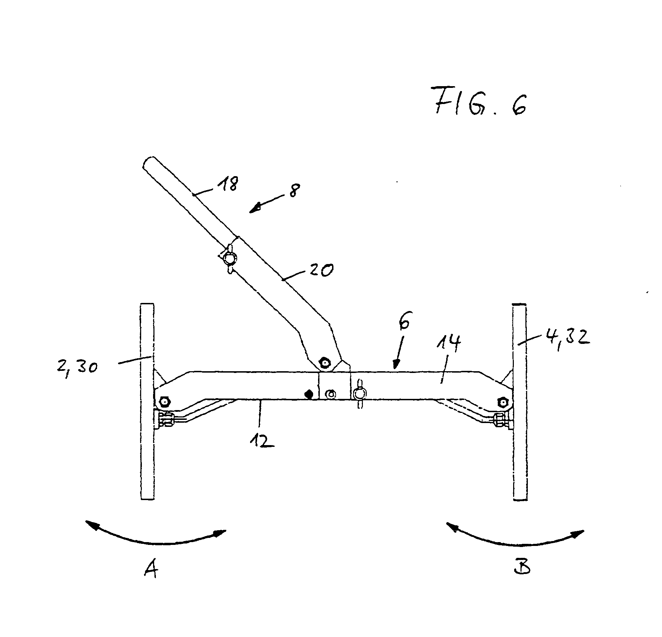

In Fig. 6 ist in vergleichbarer Weise wie in der Darstellung nach Fig. 2 die Vorrichtung mit einer anderen Verschwenkbarkeit der Spulen 2,4 gezeigt. Die Bezugszeichen sind dabei übereinstimmend mit den vorausgegangenen Figuren.

Bei der Darstellung nach Fig. 6 ist das rechte Spulengehäuse 32 in eine vertikale Lage verschwenkt, also parallel zur Anordnung des linken Spulengehäuses 30 und der darin beinhalteten Spule.

Eine derartige vertikale Anordnung beider Spulen 2,4, die auch als direkte verkoppelte Anordnung bezeichnet werden kann, bringt für bestimmte Suchzwecke erhebliche Vorteile. Im Betrieb erzeugt die Vorrichtung mit der Ausrichtung der Spulen 2,4 entsprechend der Fig. 6 ebenfalls eine induktive Wechselbeziehung zwischen Sender- und Empfängerspule. Hierbei erreicht man in vorteilhafter Weise, daß die Anordnung gezielt nur auf relativ große Metallobjekte reagiert. Kleine Metallteile verursachen nur geringe Wirbelströme oder auch nur Dämpfungseffekte, sodaß bei dieser Anordnung diese kleineren Metallteile unterdrückt werden können. Beispielsweise kann dies bei der Ortung von Tanks oder größerer Munitionskörper bedeutsam sein.

## Patentansprüche

1. Vorrichtung zum Orten von Metallteilen mit einer Sondenanordnung sowie einer Haltevorrichtung, die die Sondenanordnung trägt,
wobei die Sondenanordnung mindestens zwei Spulen aufweist und
mindestens eine der Spulen als Sender und die andere(n) Spule(n) als Empfänger geschaltet ist bzw. sind, und wobei die Haltevorrichtung einen Querträger (6) aufweist, an dessen Enden die Spulen (2, 4) angeordnet sind,
wobei an dem Querträger (6) mit Abstand zu dessen Enden ein Längsträger (8) zum Tragen der Vorrichtung befestigt ist, der sich quer zum Querträger (6) erstreckt
und an dem eine Geräteelektronik und Bedienelemente angeordnet sind,
**dadurch gekennzeichnet ,**
- **dass** die Spulen (2, 4) an den Enden des Querträgers (6) schwenkbar zur Längsrichtung des Querträgers (6) angebracht sind,
- **dass** zur Entkopplung der Spulen (2, 4) die relative Orientierung der Spulenachsen zueinander variierbar ist, wobei die Spulenachsen in der Entkopplungsstellung einen Winkel von etwa 90 bilden,
- **dass** die Spulen (2, 4) mittels relativer Orientierung der Spulenachsen in mindestens zwei Verkopplungsstellungen einstellbar sind, und
- **dass** die Spulen (2, 4) in Verkopplungsstellung parallel zueinander mit jeweils horizontaler oder vertikaler Position angeordnet sind.

2. Vorrichtung nach Anspruch 1,
**dadurch gekennzeichnet,**
**daß** der Querträger (6) ein Querrohr (10) sowie eine erste (12) und eine zweite (14), das Querrohr (10) wenigstens teilweise umgebende Gelenkverbindung (12, 14) aufweist, an deren Enden die Spulen (2, 4) schwenkbar angebracht sind.

3. Vorrichtung nach einem der vorangehenden Ansprüche,
**dadurch gekennzeichnet,**
**daß** der Querträger (6) zur Variation des Basisabstands der Spulen (2, 4) eine veränderbare Länge aufweist.

4. Vorrichtung nach Anspruch 3,
**dadurch gekennzeichnet,**
**daß** die Länge des Querträgers (6) durch das Verschieben der ersten und/oder zweiten Gelenkverbindung (12, 14) veränderbar ist.

5. Vorrichtung nach einem der vorangehenden Ansprüche,
**dadurch gekennzeichnet,**
**daß** der Querträger (6) schwenkbar mit dem Längsträger (8) verbunden ist.

6. Vorrichtung nach einem der vorangehenden Ansprüche,
**dadurch gekennzeichnet,**
**daß** der Längsträger (8) ein Tragrohr (18) sowie eine das Tragrohr wenigstens teilweise umgebende dritte Gelenkverbindung (20) aufweist, an deren Ende der Querträger (6) schwenkbar angebracht ist.

7. Vorrichtung nach einem der vorangehenden Ansprüche,
**dadurch gekennzeichnet,**
**daß** der Längsträger (8) eine veränderbare Länge aufweist.

8. Vorrichtung nach Anspruch 7,
**dadurch gekennzeichnet,**
**daß** die Länge des Längsträgers (8) durch Verschieben der dritten Gelenkverbindung (20) bezüglich des Tragrohres (18) verändert wird.

9. Vorrichtung nach einem der Ansprüche 2 bis 8,
**dadurch gekennzeichnet,**
**daß** die Gelenkverbindungen (12, 14, 20) Klemmen (22, 24, 26) aufweisen, mit welchen sie an dem Querrohr (16) bzw. dem Tragrohr (18) fixierbar sind.

10. Vorrichtung nach einem der vorangehenden Ansprüche,
**dadurch gekennzeichnet,**
**daß** der Längsträger (8) wenigstens teilweise als Batteriebehälter (18') ausgebildet ist.

11. Vorrichtung nach Anspruch 10,
**dadurch gekennzeichnet,**
**daß** der als Batteriebehälter (18') ausgebildete Teil des Längsträgers (8) ein Teil des Tragrohres (18) ist und vom restlichen Teil des Tragrohres (18) abnehmbar ist.

12. Vorrichtung nach einem der vorangehenden Ansprüche,
**dadurch gekennzeichnet,**
**daß** elektronische Bauteile innerhalb des Längsträgers (8) angeordnet sind.

13. Vorrichtung nach einem der vorangehenden Ansprüche,
**dadurch gekennzeichnet,**
**daß** die Achse der Senderspule (2, 4) im wesentlichen senkrecht zur Achse der Empfängerspule (2, 4) einstellbar ist.

14. Vorrichtung nach einem der Ansprüche 1 bis 12,
**dadurch gekennzeichnet,**
**daß** die Achse der Senderspule (2, 4) zur Bereitstellung einer Verkopplungsstellung im wesentlichen parallel zur Achse der Empfängerspule (2, 4) einstellbar ist, insbesondere eine etwa vertikale, parallele Ausrichtung vorgesehen ist.

15. Vorrichtung nach einem der vorangehenden Ansprüche,
**dadurch gekennzeichnet,**
**daß** sich Sender- und Empfängerelektronik sowie die zugehörigen Induktivitäten in Spulengehäusen (30, 32) befinden und vollständig vergossen sind.

16. Vorrichtung nach Anspruch 15,
**dadurch gekennzeichnet,**
**daß** die Spulengehäuse (30, 32) quadratisch sind.

17. Vorrichtung nach einem der vorangehenden Ansprüche,
**dadurch gekennzeichnet,**
**daß** ein externes Elektronikgehäuse mit Bedien- und/oder Kontrollelementen vorgesehen ist.

18. Vorrichtung nach einem der vorangehenden Ansprüche,
**dadurch gekennzeichnet,**
**daß** diese mit einstellbarer Bodenkompensation, Metallunterscheidung bzw. Metalldiskriminierung ausgerüstet ist.

19. Verfahren zum Orten von Metallteilen mit einer Vorrichtung nach einem der Ansprüche 1 bis 18 bei dem H je nach Suchaufgabe die Spulen (2, 4) gezielt in eine Entkopplungsstellung oder eine Kopplungsstellung gegracht werden, wobei die Spulenachsen in der Entkopplungsstellung miteinander einen Winkel von etwa 90 bilden und wobei in der Verkopplungsstellung die Sendespule und die Suchspule in eine parallele, jeweils vertikale oder horizontale Position gebracht werden, und
bei dem Ausgangssignale mit der Geräteelektronik (28) bezüglich ihrer Amplitude und/oder ihrer Phase ausgewertet werden.

20. Verfahren nach Anspruch 19,
**dadurch gekennzeichnet ,**
**daß** die analogen Amplituden- und/oder Phasenwerte digitalisiert und in dieser Form ausgewertet werden.

21. Verfahren nach einem der Ansprüche 19 oder 20,
**dadurch gekennzeichnet ,**
**dass** je nach Suchaufgabe der Basisabstand der Spulen (2, 4) verändert wird.

## Claims

1. Device for locating metal objects with a probe assembly, as well as a holding device carrying the probe assembly, in which the probe assembly has at least two coils and
at least one of the coils is connected as a transmitter and the other coil or coils as a receiver, and the holding device having a crossbar (6) on whose ends are located the coils (2, 4),
a longitudinal bar (8) for carrying the device is fixed to the crossbar (6) spaced from the ends thereof and which extends transversely to said crossbar (6) and on which are located instrument electronics and operating controls,
**characterized in that**
- the coils (2, 4) are fitted to the ends of the crossbar (6) so as to be pivotable to the longitudinal direction of said crossbar (6),
- for decoupling the coils (2, 4) the relative orientation of the coil axis with respect to one another is variable, the coil axes forming an angle of approximately 90° in the decoupling position,
- the coils (2, 4) can be set in at least two coupling positions by means of the relative orientation of the coil axes, and
- in the coupling position the coils (2, 4) are located parallel to one another with in each case a horizontal or vertical positioning.

2. Device according to claim 1,
**characterized in that**
the crossbar (6) has a transverse tube (10) and a first (12) and a second (14) hinge joint (12, 14) at least partly surrounding the transverse tube (10) and to whose ends are pivotably fitted the coils (2, 4).

3. Device according to one of the preceding claims,
**characterized in that**
the crossbar (6) has a variable length for varying the base spacing of the coils (2, 4).

4. Device according to claim 3,
**characterized in that**
the length of the crossbar (6) is variable through the displacement of the first and/or second hinge joint (12, 14).

5. Device according to one of the preceding claims,
**characterized in that**
the crossbar (6) is pivotably connected to the longitudinal bar (8).

6. Device according to one of the preceding claims,
**characterized in that**
the longitudinal bar (8) has a support tube (18) and a third hinge joint (20) at least partly surrounding the support tube and to whose end is pivotably fitted the crossbar (6).

7. Device according to one of the preceding claims,
**characterized in that**
the longitudinal bar (8) has a variable length.

8. Device according to claim 7,
**characterized in that**
the length of the longitudinal bar (8) is varied by displacing the third hinge joint (20) with respect to the support tube (18).

9. Device according to one of the claims 2 to 8,
**characterized in that**
the hinge joints (12, 14, 20) have clips (22, 24, 26) with which they can be fixed to the transverse tube (16) or support tube (18) respectively.

10. Device according to one of the preceding claims,
**characterized in that**
the longitudinal bar (8) is at least partly constructed as a battery container (18').

11. Device according to claim 10,
**characterized in that**
the part of the longitudinal bar (8) constructed as the battery container (18') is part of the support tube (18) and can be removed from the remaining part of said support tube (18).

12. Device according to one of the preceding claims,
**characterized in that**
electronic components are placed within the longitudinal bar (8).

13. Device according to one of the preceding claims,
**characterized in that**
the axis of the transmitter coil (2, 4) can be set substantially perpendicular to the axis of the receiver coil (2, 4).

14. Device according to one of the claims 1 to 12,
**characterized in that**,
for providing a coupling position, the axis of the transmitter coil (2, 4) can be set substantially parallel to the axis of the receiver coil (2, 4) and in particular an approximately vertical, parallel orientation is provided.

15. Device according to one of the preceding claims,
**characterized in that**
the transmitter and receiver electronics, as well as the associated inductance coils are located and completely encapsulated in coil casings (30, 32).

16. Device according to claim 15,
**characterized in that**
the coil casings (30, 32) are square.

17. Device according to one of the preceding claims,
**characterized in that**
there is an external electronic casing with operating and/or control elements.

18. Device according to one of the preceding claims,
**characterized in that**
it is equipped with adjustable soil compensation, metal differentiation or discrimination.

19. Method for locating metal objects with a device according to one of the claims 1 to 18, in which as a function of the search task the coils (2, 4) are in planned manner brought into a decoupling position or a coupling position, the coil axes in the coupling position forming an angle with one another of approximately 90° and where in the coupling position the transmitter coil and search coil are brought into a parallel, in each case vertical or horizontal position and
in which the output signals are evaluated with respect to their amplitude and/or phase by the instrument electronics (28).

20. Method according to claim 19,
**characterized in that**
the analog amplitude and/or phase values are digitized and evaluated in this form.

21. Method according to one of the claims 19 or 20,
**characterized in that**
the base spacing of the coils (2, 4) is varied as a function of the search task.

## Revendications

1. Dispositif de localisation d'objets métalliques avec un système de sonde ainsi qu'un dispositif de maintien, qui porte le système de sonde,
dans lequel le système de sonde présente au moins deux bobines, et
au moins l'une des bobines est montée en émetteur et l'autre(les autres) bobine(s) en récepteur, et dans lequel le dispositif de maintien présente un support transversal (6) aux extrémités duquel sont placées les bobines (2, 4),
dans lequel sur le support transversal (6), à distance de ses extrémités, est fixé un support longitudinal (8) destiné à porter le dispositif, qui s'étend transversalement au support transversal (6) et sur lequel sont placés une électronique et des éléments de commande,
***caractérisé***
- **en ce que** les bobines (2, 4) sont placées aux extrémités du support transversal (6) de manière pivotante par rapport à la direction longitudinale du support transversal (6),
- **en ce que**, pour le découplage des bobines (2, 4), l'orientation relative des axes des bobines entre eux est variable, les axes des bobines formant dans la position de découplage un angle d'environ 90°,
- **en ce que** les bobines (2, 4) sont réglables par orientation relative des axes des bobines dans au moins deux positions de couplage, et
- **en ce que** dans la position de couplage, les bobines (2, 4) sont disposées parallèlement l'une à l'autre dans une position respectivement horizontale ou verticale.

2. Dispositif selon la revendication 1,
**caractérisé *en* ce que**
le support transversal (6) comprend un tube transversal (10) ainsi qu'une première (12) et une deuxième (14) liaisons articulées (12, 14) entourant au moins partiellement le tube transversal (10), aux extrémités desquelles les bobines (2, 4) sont montées pivotantes.

3. Dispositif selon l'une quelconque des revendications précédentes,
***caractérisé en ce que***
le support transversal (6) présente une longueur modifiable pour faire varier la distance de base des bobines (2, 4).

4. Dispositif selon la revendication 3,
***caractérisé en ce que***
la longueur du support transversal (6) peut être modifiée en déplaçant la première et/ou la deuxième liaison(s) articulée(s) (12, 14).

5. Dispositif selon l'une quelconque des revendications pré cédentes,
***caractérisé en ce que***
le support transversal (6) est relié de manière pivotante au support longitudinal (8).

6. Dispositif selon l'une quelconque des revendications précédentes,
***caractérisé en ce que***
le support longitudinal (8) comprend un tube porteur (18) ainsi qu'une troisième liaison articulée (20) entourant au moins partiellement le tube porteur, liaison à l'extrémité de laquelle le support transversal (6) est monté pivotant.

7. Dispositif selon l'une quelconque des revendications précédentes,
***caractérisé en* ce que**
le support longitudinal (8) présente une longueur variable.

8. Dispositif selon la revendication 7,
***caractérisé en* ce que**
la longueur du support longitudinal (8) est modifiée par déplacement de la troisième liaison articulée (20) par rapport au tube porteur (18).

9. Dispositif selon l'une quelconque des revendications 2 à 8,
***caractérisé* en ce que**
les liaisons articulées (12, 14, 20) comprennent des pinces (22, 24, 26) avec lesquelles elles peuvent être fixées respectivement sur le tube transversal (16) ou le tube longitudinal (18).

10. Dispositif selon l'une quelconque des revendications précédentes,
***caractérisé* en ce que**
le support longitudinal (8) est conformé au moins partiellement en compartiment (18') à piles.

11. Dispositif selon la revendication 10,
***caractérisé en ce que***
la partie du support longitudinal (8) conformée en compartiment (18') à piles est une partie du tube porteur (18) et peut être retirée de la partie restante du tube porteur (18).

12. Dispositif selon l'une quelconque des revendications pré cédentes,
***caractérisé en ce que***
des composants électroniques sont placés dans le support longitudinal (8).

13. Dispositif selon l'une quelconque des revendications précédentes,
***caractérisé* en ce que**
l'axe de la bobine émettrice (2, 4) est ajustable pour l'essentiel perpendiculairement à l'axe de la bobine réceptrice (2, 4).

14. Dispositif selon l'une quelconque des revendications 1 à 12,
***caractérisé* en ce que**
l'axe de la bobine émettrice (2, 4) est ajustable pour l'essentiel parallèlement à l'axe de la bobine réceptrice (2, 4) pour fournir une position de couplage, en particulier il est prévu une orientation parallèle approximativement verticale.

15. Dispositif selon l'une quelconque des revendications précédentes,
***caractérisé* en ce que**
l'électronique d'émission et de réception ainsi que les inductances associées se trouvent dans le boîtier (30, 32) de bobines et y sont complètement enrobées.

16. Dispositif selon la revendication 15,
***caractérisé* en ce que**
le boîtier (30, 32) de bobine est carré.

17. Dispositif selon l'une quelconque des revendications pré cédentes,
***caractérisé* en ce**
**qu'**un boîtier électronique externe comportant des éléments de manoeuvre et de commande est prévu.

18. Dispositif selon l'une quelconque des revendications pré cédentes,
**caractérisé en ce**
**qu'**il est muni d'une compensation de sol réglable, d'une différenciation des métaux ou bien d'une discrimination des métaux.

19. Procédé de localisation d'objets métalliques avec un dispositif selon l'une quelconque des revendications 1 à 18,
dans lequel, en fonction de la tâche de recherche, les bobines (2, 4) sont mises de manière ciblée dans une position de découplage ou dans une position de couplage,
dans lequel les axes des bobines forment entre eux un angle d'environ 90° dans la position de découplage, et dans lequel, dans la position de couplage, la bobine émettrice et la bobine de recherche sont placées dans une position parallèle, respectivement verticale ou horizontale, et
dans lequel des signaux de sortie sont analysés avec l'électronique (28) en termes d'amplitude et/ou de phase.

20. Procédé selon la revendication 19,
***caractérisé en ce que***
les valeurs analogiques d'amplitude et/ou de phase sont numérisées et analysées sous cette forme.

21. Procédé selon l'une quelconque des revendications 19 ou 20,
***caractérisé en ce***
**qu'**en fonction de la tâche de recherche, on modifie la distance de base entre les bobines (2, 4).
